# EUROPEAN PATENT APPLICATION

(11) **EP 4 624 316 A1**
(43) Date of publication of application: **01.10.2025**
(21) Application number: 25165337.4
(22) Date of filing: 21.03.2025
(51) Int. Cl.: B63B 35/04, F16L 1/20, H02G 1/10

(54) **SUPPORT APPARATUS**

(30) Priority: 22.03.2024 GB 202404158
(71) Applicant: Grant Prideco, Inc., Houston, TX 77042 (US)
(72) Inventor: SIMS, Colin John, Stonehouse, GL10 3RQ (GB)
(74) Representative: Marks & Clerk LLP

(57) **Abstract**

The present disclosure relates to a carousel support apparatus (22) comprising a plurality of supporting assemblies (32) to be axially interposed between a support structure (34) and a carousel (12) to permit the carousel (12) to be rotatable relative to the support structure (34) about a carousel axis (24), each supporting assembly (32) comprising a bearing (38) axially movable in reverse first and second axial directions. The carousel support apparatus (22) comprises a load distribution system configured to be interconnected between at least a first supporting assembly (32a) of the plurality of supporting assemblies (32) and a second supporting assembly (32b) of the plurality of supporting assemblies (32). The load distribution system is configured to apply a bias force on the first supporting assembly (32a) in the first axial direction in response to a bias force applied on the second supporting assembly (32b) by a supported carousel (12) in the second axial direction to distribute load from the supported carousel (12) between the first and second supporting assemblies (32).

## Description

### FIELD

The present disclosure relates to a support apparatus for rotatably supporting a carousel on a support structure.

### BACKGROUND

Carousels (also known as turntables or baskets) are used to store and transport flexible elongate products, including power transmission cables, telecommunication cables, risers, chains, umbilical pipes, etc. Such flexible elongate products are conventionally stored in carousels, with the flexible elongate product being spooled or coiled around the inside of the carousel. Carousels are used widely both onshore and offshore during the manufacture, storage, transportation and laying or recovery of elongate products. Depending on the application, the mass of products contained within the carousel can vary from very small amounts up to many thousands of tonnes. Therefore, a key consideration for such carousels relates to the design of the support structure subject to dynamic loads due to rotation of the carousel and flexing and/or distortion of the foundation, such as a floating vessel, on which the carousel rests.

### SUMMARY

An aspect of the present disclosure relates to a carousel support apparatus, comprising:
a plurality of supporting assemblies to be axially interposed between a support structure and a carousel to permit the carousel to be rotatable relative to the support structure about a carousel axis, each supporting assembly comprising a bearing axially movable in reverse first and second axial directions; and
a load distribution system configured to be interconnected between at least a first supporting assembly of the plurality of supporting assemblies and a second supporting assembly of the plurality of supporting assemblies,
the load distribution system configured to apply a bias force on the first supporting assembly in the first axial direction in response to a bias force applied on the second supporting assembly by a supported carousel in the second axial direction to distribute load from the supported carousel between the first and second supporting assemblies.

The first and second supporting assemblies may cooperate with one another to distribute load from the supported carousel between the supporting assemblies to substantially maintain an equilibrium of forces acting on each bearing as the carousel rotates about the carousel axis. As such, the carousel support apparatus may mitigate the effects of misalignment, distortion or subsidence of the supporting structure below or the carousel above the bearings, which can create problems where the bearings are not equally loaded. For example, this may occur where an uneven surface of the supporting structure (e.g., due to sagging or hogging of a vessel) leads to uneven bearing heights producing localized increased loads due to the bearing surface on certain bearings standing proud of their adjacent bearings, leaving some bearings taking an uneven share of the carousel load, or none at all. The carousel support apparatus of the present disclosure may have particular utility when used with shipboard carousels where the vessel structure is liable to bend and twist due to changes in sea states, ballasting, carousel load condition, fuelling state, etc.

The supporting assemblies may be considered as compliant supporting assemblies. That is, the load distribution system may allow the first and second supporting assemblies to comply with a geometry of the surrounding architecture, including the support structure and the carousel, such that the supporting assemblies substantially equally share the load applied from the carousel. The supporting assemblies may be defined as bearing assemblies.

The carousel support apparatus may be used for supporting a carousel of any size, weight or form. Multiple applications may be possible, including the loading of a flexible elongate product onto a carousel for storage, transportation or manufacturing, or for the deployment of an elongate product from the carousel. The carousel support apparatus may be used at an onshore location, e.g., on a factory floor, dockside, etc., or at an offshore location, e.g., on a vessel, a rig platform, etc. The elongate product may comprise one or more of power transmission cables, telecommunication cables, risers, chains, umbilical pipes, etc.

The support structure may be secured to a foundation. The foundation may be provided offshore, e.g., on a vessel, a rig platform. Alternatively, the foundation may be provided onshore, e.g., a dockside platform, a ground surface, etc. The support structure may be secured to the foundation via any suitable means, such as by a bolted connection, piling, welded, etc. The support structure may comprise a "grillage" (i.e., where the support structure is separate from the foundation) or a "bedplate" (i.e., where the support structure is integrally formed with the foundation, e.g., welded to a deck of a vessel). The first and/or second supporting assemblies may be secured to the support structure, such as by a bolted connection, welded, etc.

References herein to "above" and "below" are with respect to a direction of the bias forces applied in the first and second axial directions.

The carousel may comprise or be configured to retain a flexible elongate product. The carousel may comprise a carousel base. A drive system may be configured to impart rotation to the carousel, e.g., to feed the elongate product into or out of the carousel. The carousel may be of any size, weight and form; however, in examples described herein, which relate to the deployment of a subsea cable (e.g., for the transmission of power from an offshore wind turbine, tidal stream generator, etc. to surface) the carousel may comprise a diameter of 10 to 25 m, and may be configured to retain a mass of elongate product weighing several thousand tonnes. In this respect, the support apparatus may be defined as a heavy-duty support apparatus. Components of the support apparatus may be made from an appropriate material, such as steel or cast iron. The components may be made from the same material or different materials.

The carousel support apparatus may be capable of being retrofitted to an existing carousel. For instance, the carousel support apparatus may comprise a centre bearing, as commonly used in the art, configured to be positioned around a kingpost (e.g., forming part of the foundation) such that the support apparatus may replace an existing (prior-art) carousel support apparatus.

The carousel support apparatus may comprise one or more arrays of supporting assemblies, e.g., circular arrays of supporting assemblies. The one or more arrays of supporting assemblies may be arranged concentrically around the carousel axis. The first and second supporting assemblies may be positioned adjacent to one another in the plurality of supporting assemblies, e.g., in an array of supporting assemblies. The supporting assemblies may be evenly circumferentially distributed in a circular array. A position of the supporting assemblies may be circumferentially adjusted, e.g., to accommodate foundation architecture, such as avoiding being aligned with "hard spots" on a vessel deck.

The bearings of the supporting assemblies may comprise one or more rolling bodies (such as rollers, balls, needles, etc.) or pads, etc. In some examples described herein, however, the bearings may comprise rollers. The supporting assemblies may be defined as bearing assemblies. The carousel support apparatus may be defined as a carousel bearing apparatus.

The supporting assemblies may be secured to the carousel. Alternatively, the supporting assemblies may be secured to the support structure. The supporting assemblies (e.g., the bearings of the supporting assemblies) may be configured to engage the support structure. The supporting assemblies (e.g., the bearings of the supporting assemblies) may be configured to engage the carousel. The bearings may each comprise an engaging surface. The engaging surfaces may each comprise a bearing track, e.g., a roller track. The bearing track may comprise a low friction material. The supporting assemblies (e.g., the bearings of the supporting assemblies) may be configured to engage one or more track plates. The one or more track plates may be interposed between the supporting assemblies and the carousel. Alternatively, the one or more track plates may be interposed between the supporting assemblies and the support structure. In some examples, the support apparatus may comprise the one or more track plates.

The load distribution system may be configured to apply a bias force on each supporting assembly of the plurality supporting assemblies in the first axial direction in response to a bias force applied on an adjacent supporting assembly by the supported carousel in the second axial direction to distribute load from the supported carousel between the supporting assemblies.

The load distribution system may comprise a linkage configured to apply the bias force from the second supporting assembly to the first supporting assembly.

The load distribution system may comprise a linkage between each adjacent supporting assembly. The linkage may be configured to apply a bias force on each supporting assembly from an adjacent supporting assembly.

The linkage may comprise a mechanical linkage. The mechanical linkage may be configured to rotate about a pivot point to apply the bias force from the second supporting assembly to the first supporting assembly. The mechanical linkage may be configured to provide a 1:1 mechanical advantage. The mechanical linkage may be configured to apply the bias force to the first supporting assembly with equal magnitude to that of the bias force applied by the support carousel to the second supporting assembly. However, in other examples, the mechanical advantage may comprise a mechanical ratio other than 1:1, e.g., to amplify a bias force applied to one or more of the bearing assemblies.

In one embodiment, one or both of the first and second supporting assemblies may define the mechanical linkage. The first supporting assembly may be configured to rotate about a first pivot point. The second supporting assembly may be configured to rotate about a second pivot point. Rotation of the first and/or second supporting assembly may apply the bias force from the second supporting assembly to the first supporting assembly.

The first and second supporting assemblies may define a pair of supporting assemblies. Each supporting assembly may be configured to rotate about a pivot point. Each supporting assembly may comprise a bearing support portion on one side of the pivot point and a load transfer portion on the other side of the pivot point. Each supporting assembly may be pivotably mounted to a base support of the supporting assembly via a pivot axle or shaft.

The load transfer portion of the second supporting assembly may be configured to engage the bearing support portion of the first supporting assembly to apply the bias force from the second supporting assembly to the first supporting assembly. In this respect, one or both of the first and second support supporting assemblies may be defined as equalising levers. One or both of the first and second support supporting assemblies may comprise a curved profile, e.g., convex profile, for engaging the other.

Each supporting assembly may comprise a shape profile that transitions from the bearing support portion to the load transfer portion, such that the bearing support portion may be elevated above the load transfer portion. The shape profile may allow for the bearing support portion of the first supporting assembly to be stacked axially on top of the load transfer portion of the second supporting assembly, when the supporting assemblies are assembled together. The bearing support portion of the first supporting assembly may extend above and overlap with the load transfer portion of the second supporting assembly.

A portion of the bearing of the first supporting assembly may extend axially below the bearing support portion of the first supporting assembly such that, when the first and second supporting assemblies are engaged, the portion of the bearing below the bearing support portion of the first supporting assembly may sit within a portion of the load transfer portion of the second supporting assembly. This may provide for an axially compact arrangement reducing a height of the support apparatus.

Each supporting assembly may comprise a base support. Each supporting assembly may comprise a support beam. The support beam may be pivotably mounted to the base support, e.g., via a pivot axle or shaft. The support beam may define the bearing support portion and the load transfer portion. Each supporting assembly may comprise a plurality of support beams (e.g., a pair of support beams). Each supporting assembly may comprise a strut arrangement interconnecting the support beams. The bearing of the supporting assembly may be disposed between the support beams. The support beams may extend perpendicular to a bearing axle or shaft of the bearing.

The plurality of supporting assemblies may comprise a third supporting assembly. The third supporting assembly may be arranged adjacent the second supporting assembly in the plurality of supporting assemblies. The load distribution system may be configured to apply a bias force on the second supporting assembly in the first axial direction in response to a bias force applied on the third supporting assembly by a supported carousel in the second axial direction to distribute load from the supported carousel between the second and third supporting assemblies.

The load distribution system may comprise a second linkage configured to apply the bias force from the third supporting assembly to the second supporting assembly. The second linkage may comprise a second mechanical linkage. The second mechanical linkage may be configured to rotate about a pivot point to apply the bias force from the third supporting assembly to the second supporting assembly. One or both of the second and third supporting assemblies may define the mechanical linkage. The third supporting assembly may be configured to pivot about a pivot point to apply the bias force from the third supporting assembly to the second supporting assembly.

In use, a first bias force in the second axial direction applied by the supported carousel to a bearing of the first supporting assembly may produce a first moment biasing the first supporting assembly in a first rotational direction. The bearing support portion of the first supporting assembly may transmit a force in the second axial direction to the load transfer portion of the second supporting assembly, which may in turn produce a second moment biasing the second supporting assembly in a second rotational direction. A second bias force in the second axial direction applied by the supported carousel to the bearing of the second supporting assembly may produce a third moment biasing the second supporting assembly in a first rotational direction (e.g., opposing the second moment). Further, a third bias force in the second axial direction applied by the supported carousel to the bearing of the third supporting assembly produces a fourth moment biasing the third supporting assembly in a first rotational direction. The load transfer portion of the third supporting assembly may transmit a force in the first axial direction to the bearing support portion of the second supporting assembly, which may in turn produce a fifth moment biasing the second supporting assembly in a second rotational direction (e.g., also opposing the second moment).

This configuration of opposing moments acting on the supporting assemblies resulting from bias forces applied from the supported carousel to the bearings, as described above, may apply to each of the supporting assemblies of the plurality of supporting assemblies, e.g., providing for a continuous load distribution system interconnecting the supporting assemblies. However, in other examples, the support apparatus may comprise additional supporting assemblies of a different form. That is, not every supporting assembly may be configured for load distribution.

One or both of the first and second supporting assemblies may comprise an engaging structure. The engaging structure of one of the first and second supporting assemblies may be configured to engage an engaging structure of the other of the first and second supporting assemblies. The engaging structure of one or both of the first and second supporting assemblies may extend across a width of the supporting assembly, e.g., in a direction parallel to a pivot axis of the supporting assembly. The engaging structure of one or both of the first and second supporting assemblies may comprise a contact area. The contact area may be configured for applying the bias force in the first axial direction from one supporting assembly to another supporting assembly. A first contact area may be at the load transfer portion of the supporting assembly. The engaging structure of one or both of the first and second supporting assemblies may comprise a second contact area at the bearing support portion of the supporting assembly. The second contact area of the engaging structure may be interposed between a bearing of the supporting assembly and the load transfer portion of the other supporting assembly. The second contact area at the bearing support portion may extend across a region adjacent the bearing of the respective supporting assembly (e.g., above or below the bearing). The first and second contact areas may extend between respective support beams of a supporting assembly.

One or both of the first and second supporting assemblies may be integrally formed with the engaging structure, e.g., by casting. Alternatively, one or both of the first and second supporting assemblies may be secured to the engaging structure, e.g., via a bolted connection, welded, etc. Alternatively, the engaging structure may be provided by a cover structure mounted on one or both of the first and second supporting assemblies. The engaging structure may allow for greater angles between the bearings, such as when there is a small bearing count, e.g., on an inner track of a carousel having a smaller radius. Additionally, the engaging structure may provide for increased loading capabilities by increasing the surface area available for transmitting loads between the supporting assemblies.

In another embodiment, the mechanical linkage may comprise a lever arm extending between the first and second supporting assemblies. The lever arm may be configured to engage the first supporting assembly at a first end of the lever arm and engage the second supporting assembly at a second end of the lever arm. The lever arm may comprise a pivot point (e.g., a fulcrum) located between the first and second supporting assemblies, such that the lever arm can rotate about the pivot point. The lever arm may be configured to rock about the pivot point. The lever arm may be configured to rest upon a support surface. The support surface may be provided by the support structure. Alternatively, the support surface may be provided by an intermediate structure interposed between the support structure and the lever arm. The lever arm may comprise a profile, e.g., a curved lower surface, to permit the lever arm to rock on the support structure. Alternatively, the lever arm may be pivotably mounted to an intermediate structure extending from the support structure.

Each supporting assembly may comprise a base support. Each supporting assembly may comprise a pair of side walls. The side walls may extend parallel to a bearing axle or shaft (e.g., a roller axle or shaft) of the bearing. The bearing support may comprise a bearing carrier mounting the bearing, e.g., via a bearing axle. The bearing carrier may be moveably disposed relative to the base support in the first and second axial directions. The side walls may each define an axial slot through which a portion of the bearing carrier may be slidably disposed. Movement of the bearing carrier relative to the base support may apply the bias force from the second supporting assembly to the first supporting assembly by producing a moment on the lever arm.

Each supporting assembly may comprise a cavity for receiving a respective end of a lever arm. The bearing carrier may comprise a contact area for being engaged by the respective end of the lever arm to apply the bias force from the second supporting assembly to the first supporting assembly. The cavity may be defined between the bearing carrier, the base support and the side walls.

In use, the lever arm may define a first lever arm, and the load distribution system may comprise a second lever arm extending between the second supporting assembly and a third supporting assembly. A first bias force in the second axial direction applied by the supported carousel to the bearing of the first supporting assembly may produce a first moment biasing the first lever arm to rotate in a second rotational direction. The first lever arm may therefore apply a bias force on the bearing carrier of the second supporting assembly in the first axial direction. A second bias force applied by the supported carousel to the bearing of the second supporting assembly may produce a second moment biasing the first lever arm in a first rotational direction, e.g., opposing the second moment. The second bias force applied by the supported carousel to the bearing of the second supporting assembly may also produce a third moment biasing the second lever in a second rotational direction. The second lever arm may therefore apply a bias force on the bearing carrier of the third supporting assembly in the first axial direction. Further, a third bias force applied by the supported carousel to the bearing of the second supporting assembly may produce a fourth moment biasing the second lever in a first rotational direction, e.g., opposing the third moment. This configuration of opposing moments acting on the supporting assemblies resulting from bias forces applied from the supported carousel to the bearings may extend around the entire circular array of supporting assemblies, e.g., to provide for a continuous load distribution system interconnecting the supporting assemblies. However, in other examples, the support apparatus may comprise additional supporting assemblies of a different form. That is, not every supporting assembly may be configured for load distribution.

The load distribution systems described above may be defined as mechanical load distribution systems, in that the load distribution system may comprise one or more mechanical linkages. Mechanical linkages may provide for simpler and cheaper designs that are less prone to failure, e.g., compared to active hydraulic systems comprising a multiplicity of components, such as pumps, accumulators, etc. However, the present disclosure is not limited to such mechanical load distribution systems, and also provides for a hydraulic load distribution system. The hydraulic load distribution system may be defined as a passive hydraulic load distribution system.

The load distribution system may comprise a hydraulic linkage. The hydraulic linkage may comprise a fluid line extending between the first and second supporting assemblies. Each supporting assembly may comprise a piston slidably disposed within a cylinder. The piston and cylinder may define a piston chamber. The bearing may be secured to the piston. The bearing may be secured to the cylinder. The bearing may be movable in the first and second axial directions, e.g., relative to the cylinder or piston. The bearing may be secured to a bearing carrier via a bearing axle or shaft (e.g., a roller axle of shaft). The piston chamber may comprise a fluid, e.g., an incompressible fluid. The hydraulic linkage may provide pressure communication between the piston chambers of the first and second supporting assemblies. That is, the piston chambers of the first and second supporting assemblies may be pressure balanced, e.g., via the hydraulic linkage. The plurality of supporting assemblies may define an enclosed hydraulic system comprising a fixed volume of fluid. Alternatively, one or more supporting assemblies may communicate with an accumulator or fluid reservoir, e.g., to control a volume of fluid in the system, such as to modify a bearing height to elevate or lower the carousel as required.

The support apparatus may comprise a third supporting assembly. The third supporting assembly may also comprise a piston cylinder arrangement, as above. A first bias force applied by the supported carousel to the bearing of the first supporting assembly may be transmitted to the first piston of the first supporting assembly. The first piston may be biased in a direction towards a base of the first cylinder, which may increase a fluid pressure within the hydraulic load distribution system. A second bias force in the second axial direction applied by the supported carousel to the bearing of the second supporting assembly may be transmitted to the second piston of the second supporting assembly. The second piston may be biased in a direction towards a base of the second cylinder, which may further increase a fluid pressure within the hydraulic load distribution system. When a bias force applied to the bearing of the first supporting assembly is greater than a bias force applied to the bearing of the second supporting assembly (e.g., due to an uneven height of the bearings), the hydraulic load distribution system may increase the volume of the second piston chamber (causing the bearing of the second supporting assembly to take more load from the carousel) and decrease the volume of the first supporting assembly (causing the bearing of the first supporting assembly to take less load from the carousal). The hydraulic load distribution system may be configured to operate at a fluid pressure, e.g., determined in accordance with a load applied by the supported carousel to the supporting assemblies.

This configuration may apply to each of the supporting assemblies, e.g., with each of the plurality of supporting assemblies comprising a piston cylinder arrangement, as above, and with each of the plurality of supporting assemblies connected to an adjacent supporting assembly via a fluid line. The hydraulic load distribution system may interconnect each of the plurality of supporting assemblies, such that a change in volume of one piston chamber may modify a volume of each piston chamber of the other supporting assemblies of the plurality of supporting assemblies. One advantage of the hydraulic load distribution system is that the supporting assemblies may be less sensitive to angular distribution, e.g., the supporting assemblies need not be evenly circumferentially distributed and may be more readily installed with varying gaps there between to accommodate foundation architecture.

In other examples, the support apparatus may comprise additional supporting assemblies of a different form. That is, not every supporting assembly may be configured for load distribution.

Further, the support apparatus may comprise a combination of one or more mechanical linkages and hydraulic linkages. As such, the load distribution may be defined as a hybrid (mechanical-hydraulic) system.

Another aspect of the present disclosure relates to a carousel system, comprising:
a carousel;
a plurality of supporting assemblies to be axially interposed between a support structure and the carousel to permit the carousel to be rotatable relative to the support structure about a carousel axis, each supporting assembly comprising a bearing axially movable in reverse first and second axial directions; and
a load distribution system interconnected between at least a first supporting assembly of the plurality of supporting assemblies and a second supporting assembly of the plurality of supporting assemblies,
the load distribution system configured to apply a bias force on the first supporting assembly in the first axial direction in response to a bias force applied on the second supporting assembly by the carousel in the second axial direction to distribute load from the carousel between the first and second supporting assemblies.

Another aspect of the present disclosure relates to a supporting assembly for a carousel support apparatus.

The supporting assembly may comprise one or more of the features described hereinabove in relation to the first and second supporting assemblies of the carousel support apparatus.

An aspect of the present disclosure relates to a carousel bearing apparatus, comprising:
a plurality of bearing assemblies to be axially interposed between a support structure and a carousel to permit the carousel to be rotatable relative to the support structure about a carousel axis, each bearing assembly comprising a roller axially movable in reverse first and second axial directions; and
a load distribution system configured to be interconnected between at least a first bearing assembly of the plurality of bearing assemblies and a second bearing assembly of the plurality of bearing assemblies,
the load distribution system configured to apply a bias force on the first bearing assembly in the first axial direction in response to a bias force applied on the second bearing assembly by a supported carousel in the second axial direction to distribute load from the supported carousel between the first and second bearing assemblies.

The apparatus disclosed herein, or at least some components of the apparatus, may be manufactured in any suitable manner, such as using conventional manufacturing processes. Accordingly, examples described herein not only include the apparatus and associated components, but also methods of manufacturing the apparatus or associated components via conventional manufacturing processes.

In some examples, the apparatus, or any individual component or groups of components may be manufactured by additive manufacturing. Such described additive manufacturing typically involves processes in which components are fabricated based on three-dimensional (3D) information, for example a three-dimensional computer model (or design file), of the component.

Accordingly, examples described herein not only include the apparatus and associated components, but also methods of manufacturing the apparatus or associated components via additive manufacturing and computer software, firmware or hardware for controlling the manufacture of the apparatus and associated components via additive manufacturing.

The structure of the apparatus and associated components may be represented digitally in the form of a design file. A design file, or computer aided design (CAD) file, is a configuration file that encodes one or more of the surface or volumetric configuration of the shape of the apparatus and associated components. That is, a design file represents the geometrical arrangement or shape of the apparatus and associated components.

In light of the above, the present disclosure includes methods of manufacture, such as via additive manufacturing. This includes the steps of obtaining a design file representing the apparatus and associated components and instructing an additive manufacturing apparatus to manufacture the apparatus and associated components in assembled or unassembled form according to the design file. The additive manufacturing apparatus may include a processor that is configured to automatically convert the design file into computer executable instructions for controlling the manufacture of the apparatus and associated components. In these embodiments, the design file itself may automatically cause the production of the apparatus and associated components once input into the additive manufacturing device. Accordingly, in this embodiment, the design file itself may be considered computer executable instructions that cause the additive manufacturing apparatus to manufacture the apparatus and associated components. Alternatively, the design file may be converted into instructions by an external computing system, with the resulting computer executable instructions being provided to the additive manufacturing device.

Another aspect of the present disclosure relates to a method for supporting a carousel, comprising:
axially interposing a plurality of supporting assemblies between a support structure and a carousel to permit the carousel to be rotatable relative to the support structure about a carousel axis, each supporting assembly comprising a bearing axially movable in reverse first and second axial directions; and
applying a bias force on a first supporting assembly of the plurality of supporting assemblies in the first axial direction in response to a bias force applied on a second supporting assembly of the plurality of supporting assemblies by a supported carousel in the second axial direction to distribute load from the supported carousel between the first and second supporting assemblies.

The method may comprise rotating the carousel to load an elongate product onto the carousel, e.g., for storage, transportation or manufacturing. The method may comprise rotating the carousel to deploy an elongate product from the carousel.

The method may comprise axially interposing one or more circular arrays of supporting assemblies between the support structure and the carousel.

The method may comprise applying the bias force from the second bearing to the first supporting assembly using a mechanical linkage. The method may comprise rotating the mechanical linkage about a pivot point to apply the bias force from the second supporting assembly to the first supporting assembly.

The method may comprise applying the bias force from the second bearing to the first supporting assembly by rotating the first supporting assembly about a first pivot point and/or the second supporting assembly about a second pivot point. The method may comprise engaging a load transfer portion of the second supporting assembly with a bearing support portion of the first supporting assembly to apply the bias force from the second supporting assembly to the first supporting assembly.

The method may comprise rotating a lever arm extending between the first and second supporting assemblies to apply the bias force from the second supporting assembly to the first supporting assembly.

The method may comprise applying the bias force from the second bearing to the first supporting assembly using a hydraulic linkage.

The method may comprise applying a bias force on the second supporting assembly in the first axial direction in response to a bias force applied on a third supporting assembly by a supported carousel in the second axial direction to distribute load from the supported carousel between the second and third supporting assemblies.

Another aspect of the present disclosure relates to a method for retrofitting a carousel support apparatus to a support structure, comprising:
axially interposing a plurality of supporting assemblies between the support structure and a carousel to permit the carousel to be rotatable relative to the support structure about a carousel axis, each supporting assembly comprising a bearing axially movable in reverse first and second axial directions; and
applying a bias force on a first supporting assembly of the plurality of supporting assemblies in the first axial direction in response to a bias force applied on a second supporting assembly of the plurality of supporting assemblies by a supported carousel in the second axial direction to distribute load from the supported carousel between the first and second supporting assemblies.

The method may comprise removing an existing carousel support apparatus from the support structure, prior to axially interposing the plurality of supporting assemblies between the support structure and the carousel.

It will be appreciated that features described in relation to one aspect may be equally combined with any other aspect described herein.

### BRIEF DESCRIPTION OF THE DRAWINGS

These and other aspects of the present disclosure will now be described, by way of example only, with reference to the accompanying drawings, in which:
Figure 1 is a schematic illustration of an elongate product being deployed from a carousel on a vessel;
Figure 2 is a cross-sectional end view of a carousel on a deck of a vessel;
Figure 3 is a cross-sectional end view of a carousel located within a vessel hold of a vessel;
Figure 4 is an isometric view of a carousel support apparatus axially interposed between a support structure and a carousel;
Figure 5 is an isometric view of the support apparatus of Figure 4, with the carousel removed;
Figure 6 is an isometric view of a supporting assembly of the support apparatus of Figure 4;
Figure 7 is an enlarged view of region A of Figure 5;
Figure 8 is an isometric view of the supporting assembly of Figure 6 comprising a cover structure;
Figure 9 is an isometric view of an alternative carousel support apparatus axially interposed between a support structure and a carousel;
Figure 10 is an isometric view of a supporting assembly of the carousel support apparatus of Figure 9;
Figure 11 is an enlarged view of region B of Figure 9;
Figure 12 is a schematic illustration of an alternative carousel support apparatus; and
Figure 13 is an enlarged view of region C of Figure 12.

### DETAILED DESCRIPTION OF THE DRAWINGS

Aspects of the present disclosure relate to a carousel support apparatus for supporting a carousel. Multiple applications may be possible and the support apparatus may be used to facilitate rotation of a carousel for any purpose, including the loading of flexible elongate product onto a carousel for storage, transportation or manufacturing, or for the deployment of elongate product from the carousel. The carousel support apparatus may be used at an onshore location, e.g., on a factory floor, dockside, etc., or at an offshore location, e.g., on a vessel, a rig platform, etc. For the purposes of providing an exemplary application, the following description relates to a carousel support apparatus supporting a carousel on a vessel.

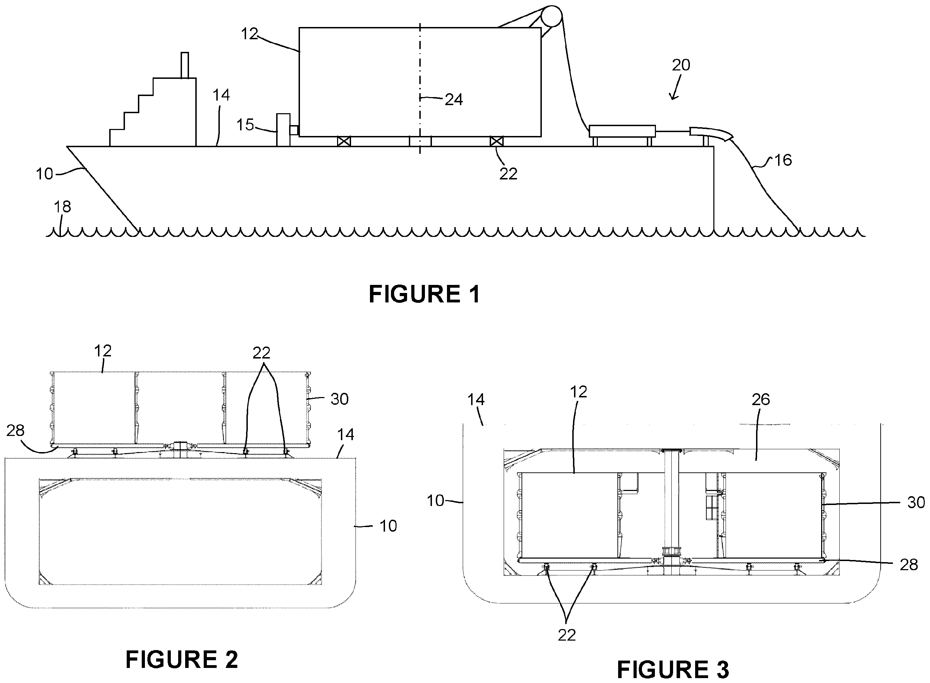

Figure 1 is a schematic illustration of a vessel 10 comprising a carousel 12 located on a deck 14 of the vessel 10 with a subsea cable 16 being deployed from the carousel 12 at sea 18. In other examples, other forms of flexible elongate product may be deployed from the carousel 12, such as risers, chains, umbilical pipes, etc. The vessel 10 includes a cable tensioning and deployment system 20 to assist with the deployment of the cable 16. A carousel support apparatus 22 supports the carousel 12 and permits the carousel 12 to rotate about a carousel axis 24. Figures 2 and 3, which are cross-sectional end views of the vessel 10 of Figure 1, illustrate the carousel 12 located at different locations on the vessel 10. In particular, Figure 2 illustrates the carousel 12 on the deck 14 of the vessel 10 (as in Figure 1) and Figure 3 illustrates the carousel 12 located within a hold 26 of the vessel 10. In the example of Figure 3, the vessel 10 may comprise a rear deployment area for deploying the cable 16 from the hold 26.

The carousel 12 consists of a carousel base 28 and a carousel wall 30 for retaining cable 16 within an annular space of the carousel 12. In some examples, the carousel wall 30 may comprise a plurality of circumferentially arranged posts or fence structures for retaining the cable 16 within the carousel 12, instead of the solid wall illustrated in Figures 1 to 3. The vessel 10 comprises a drive system 15 to impart rotation to the carousel 12 when required to feed the cable 16 into or out of the carousel 12. While Figure 1 illustrates the cable 16 being deployed from the carousel 12, the vessel 10 may be configured for the recovery of a cable 16 (or other flexible elongate product) from a subsea location with the cable 16 being drawn into the carousel 12. The carousel 12 may be of any size depending on the application. However, the carousel 12 used in the present example, illustrated in Figure 1, may typically comprise a diameter of 10 to 25 m, and may be configured to retain a mass of elongate product of several thousand tonnes. In this respect, the support apparatus may be defined as a heavy-duty support apparatus. The support apparatus may be made from an appropriate material, such as steel or cast iron.

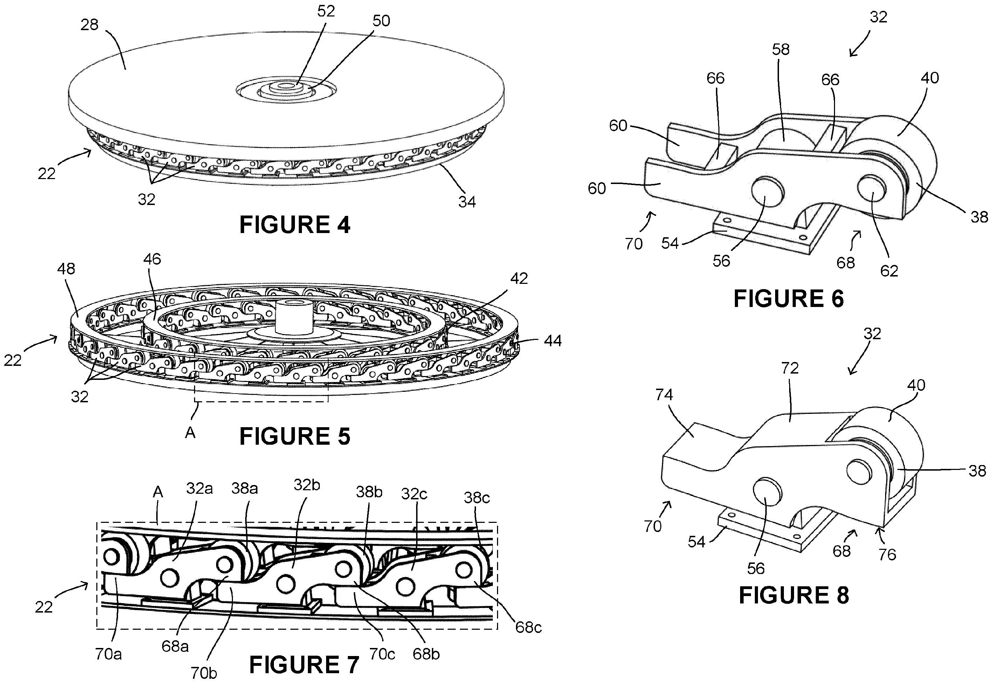

Figure 4 is an isometric view of a carousel support apparatus 22 comprising a plurality of supporting assemblies 32 axially interposed between a support structure 34 and a carousel base 28 (the carousel wall 30 is omitted in Figure 4) to permit the carousel 12 to be rotatable relative to the support structure 34 about the carousel axis 24. As will described in more detail below, each supporting assembly 32 comprises a roller 38 axially movable in reverse first and second axial directions; however, in other examples, other forms of bearings may be used, such as a pads, balls, needles, etc.. A load distribution system interconnects the plurality of supporting assemblies 32 and is configured to apply a bias force on a supporting assembly 32 in the first axial direction in response to a bias force applied on an adjacent supporting assembly 32 by a supported carousel 12 in the second axial direction to distribute load from the supported carousel 12 between the supporting assemblies 32. The load distribution system comprises mechanical linkages configured to apply bias forces between supporting assemblies 32, which will be discussed in more detail below. The support structure 34 can be secured, e.g., by welding or other means, to a foundation, such as the vessel deck 14 in Figure 1. The support structure 34 may be known as a "grillage" if the support structure 34 is separate from the foundation, or as a "bedplate" if the support structure 34 is formed as one the foundation, e.g., welded to a vessel deck 14.

Figure 5 is an isometric view of the carousel support apparatus 22 of Figure 4, with the carousel base 28 removed. As shown in Figure 4, the carousel base 28 rests upon inner and outer circular arrays 42, 44 of supporting assemblies 32 to permit the carousel 12 to rotate relative to the support structure 34 about the carousel axis 24. In the present example, the support apparatus 22 comprises two circular arrays arranged concentrically about the carousel axis 24; however, any number of circular arrays may be used. The supporting assemblies 32 are secured to the support structure 34, e.g., by a bolted connection. Inner and outer track plates 46, 48 rest upon the respective supporting assemblies 32, and are interposed between the supporting assemblies 32 and the carousel base 28. The inner and outer track plates 46, 48 are secured to the carousel base 28 and configured to rotate with the carousel 12. In other examples, the supporting assemblies 32 may be secured to the carousel base 28 and the supporting assemblies 32 may rest upon one or more track plates secured to the support structure 34. The carousel support apparatus 22 comprises a centre bearing 50 configured to be positioned around a kingpost 52, as commonly used in the art, allowing for the carousel support apparatus 22 to be retrofitted to existing carousels, if required.

Figure 6 is an isometric view of an individual supporting assembly 32 of the carousel support apparatus 22. The supporting assembly 32 is pivotably mounted to a base support 54 via a pivot axle or shaft 56 at a pivot bracket or bushing 58. When assembled, the base support 54 may be secured to the support structure 34 via a bolted connection, welded, etc. The supporting assembly 32 comprises a pair of support beams 60 interconnected by strut members 66 and including an aperture through which a respective end of the pivot axle 56 extends to pivotably secure the support beam 60 to the base support 54. The supporting assembly 32 defines a bearing support portion 68 on one side of the pivot axle 56 and a load transfer portion 70 on the other side of the pivot axle 56. The supporting assembly 32 defines a shape profile that transitions from the bearing support portion 68 to the load transfer portion 70, such that lower surfaces of the bearing support portion 68 are elevated above upper surfaces of the load transfer portion 70. This allows for the bearing support portion 68 to be stacked on top of the load transfer portion 70 of an adjacent supporting assembly 32, i.e., with the bearing support portion 68 extending above and overlapping with the load transfer portion 70.

The roller 38 of the supporting assembly 32 is mounted at the bearing support portion 68 between the pair of support beams 60 via a roller axle or shaft 62. A bearing may be provided at the roller axle 62 to permit rotation of the roller 38 relative to the bearing support portion 68. The roller 38 is configured to engage the track plate 48 upon which the carousel base 28 rests, and comprises an engaging surface 40 for engaging the track plate 48. The upper surface of the load transfer portion 70 defines a first contact surface for engaging a lower surface of a bearing support portion 68 of an adjacent supporting assembly 32. Further, a lower surface of the bearing support portion 68 defines a second contact surface for engaging an upper surface of a load transfer portion 70 of an adjacent supporting assembly 32. In this respect, the supporting assembly 32 may be defined as an equalising lever. A portion of the roller 38 extends axially below the bearing support portion 68 such that, when adjacent supporting assemblies 32 are engaged, the portion of the roller 38 below the bearing support portion 68 may sit within a portion of the load transfer portion 70 of an adjacent supporting assembly 32. This may provide for an axially compact arrangement reducing a height of the support apparatus 22. The first and second contact surfaces may comprise a curved profile (e.g., a convex profile) to cooperate with respective contact surfaces on adjacent supporting assemblies 32.

Figure 7 is an enlarged view of region A of Figure 5, illustrating first, second and third adjacent supporting assemblies 32a, 32b, 32c of the outer circular array 44. In operation, a first downwards force applied by the supported carousel 12 to the roller 38a of the first supporting assembly 32a produces a first moment biasing the first supporting assembly 32a in a first rotational direction. Consequently, the bearing support portion 68a of the first supporting assembly 32a acts on the load transfer portion 70b of the second supporting assembly 32b, thereby producing a second moment biasing the second supporting assembly 32b in a second rotational direction. At the same time, a second downwards force applied by the supported carousel 12 to the roller 38b of the second supporting assembly 32b produces a third moment biasing the second supporting assembly 32b in a first rotational direction, opposing the second moment. Further, a third downwards force applied by the supported carousel 12 to the roller 38c of the third supporting assembly 32c produces a fourth moment biasing the third supporting assembly 32c in a first rotational direction. Consequently, the load transfer portion 70c of the third supporting assembly 32c acts on the bearing support portion 68b of the second supporting assembly 32b, thereby producing a fifth moment biasing the second supporting assembly 32b in a second rotational direction. As such, the supporting assemblies 32a, 32b, 32c cooperate with one another to distribute load from the supported carousel 12 between the supporting assemblies 32a, 32b, 32c. This configuration of opposing moments acting on the supporting assemblies 32a, 32b, 32c may extend around the entire circular array 44 of supporting assemblies 32 to provide for a continuous load distribution system. However, in other examples, the support apparatus 22 may comprise additional supporting assemblies 32 of a different form. That is, not every supporting assembly 32 may be configured for load distribution.

The supporting assemblies 32 cooperate with one another to distribute load from the supported carousel 12 between the supporting assemblies 32 to maintain an equilibrium of forces acting on each roller 38 as the carousel 12 rotates about the carousel axis 24. As such, the carousel support apparatus 22 may provide for several advantages. For instance, the supporting assemblies 32 may cooperate with one another to distribute load from the supported carousel 12 between the supporting assemblies 32 to maintain an equilibrium of forces acting on each roller 38 as the carousel 12 rotates about the carousel axis 24. As such, the carousel support apparatus 22 may mitigate the effects of misalignment, distortion or subsidence of the supporting structure below or the carousel 12 above the rollers 38, which can create problems where the rollers 38 are not equally loaded, e.g., resulting in premature failure of the track plate, roller track and/or roller axle bearings. For example, this may occur where an uneven surface of the supporting structure (e.g., due to sagging or hogging of a vessel) leads to uneven roller 38 heights producing localized increased loads on the track plates due to the roller 38 surface on certain rollers 38 standing proud of their adjacent rollers 38, leaving some bearings taking an uneven share of the carousel load, or none at all, e.g., causing the track plate to bridge across one or more rollers 38. The support apparatus 22 may have particular utility when used with shipboard carousels where the vessel structure is liable to bend and twist due to changes in sea states, ballasting, carousel load condition, fuelling state, etc.

The supporting assemblies 32 may be considered as compliant supporting assemblies 32. That is, the load distribution system may allow the first and second supporting assemblies 32 to comply with a geometry of the surrounding architecture, including the support structure 34 and the carousel, such that the supporting assemblies 32 substantially equally share the load applied from the carousel.

Figure 8 illustrates a supporting assembly 32 comprising an engaging structure 72. The engaging structure 72 comprises a first contact area 74 at the load transfer portion 70 for engaging a contact area of an engaging structure 72 of an adjacent supporting assembly 32. Further, the engaging structure 72 comprises a second contact area 76 at the bearing support portion 68, extending across a region below the roller 38, for engaging a contact area of an engaging structure 72 of an adjacent supporting assembly 32. The supporting assembly 32 may be integrally formed with the engaging structure 72, e.g., by casting, or may be secured to the engaging structure 72, e.g., via a bolted connection, welded, etc. Alternatively, the engaging structure 72 may be provided by a cover structure mounted to the supporting assembly 32. The engaging structure 72 may allow for greater angles between the rollers 38, such as when there is a small bearing count, e.g., on an inner track of a carousel 12 having a smaller radius. Additionally, the engaging structure 72 may provide for increased loading capabilities by increasing the surface area available for transmitting loads between the supporting assemblies 32.

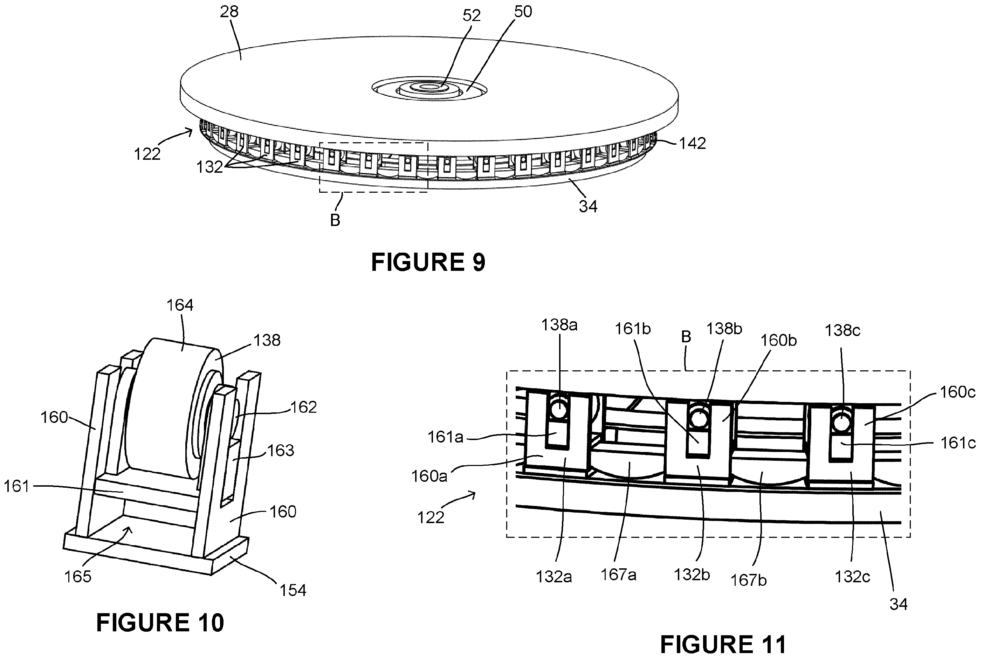

Figure 9 illustrates an alternative carousel support apparatus 122 comprising an array 142 of alternative supporting assemblies 132. The alternative support apparatus 122 is similar to the support apparatus 22 of Figures 4 and 5, with the supporting assemblies 132 arranged to cooperate with one another to distribute load from a supported carousel 12 between the supporting assemblies 132. The carousel base 128 rests upon one or more circular arrays 142 of supporting assemblies 132 to permit the carousel 12 to rotate relative to the support structure 34 about the carousel axis 24, similar to the configuration illustrated in Figure 5. The supporting assemblies 132 are secured to the support structure 34, e.g., by a bolted connection. A track plate (not shown) rests upon the array 142 of supporting assemblies 132 and is interposed between the supporting assemblies 132 and the carousel base 28. In other examples, as with the support apparatus 22 of Figures 4 to 8, the supporting assemblies 132 may instead be secured to the carousel base 28 and the supporting assemblies 132 may rest upon one or more track plates secured to the support structure 34. The carousel support apparatus 122 comprises a centre bearing 150 configured to be positioned around a kingpost 52, as commonly used in the art, allowing for the carousel support apparatus 122 to be retrofitted to existing carousels, if required.

Referring to Figure 10, the alternative supporting assembly 132 comprises a base 154, a pair of side walls 160 and a bearing carrier 161 mounting the roller 138, the bearing carrier 161 moveably disposed within the side walls 160. The bearing carrier 161 defines two apertures through which a respective end of a roller axle 162 extends to secure the roller 138 to the bearing carrier 161. A bearing may be provided to permit rotation of the roller axle 162 relative to the bearing carrier 161. The roller 138 is configured to sit within the track plate upon which the carousel base 128 rests, and comprises a bearing track 140 for engaging the track plate. The side walls 160 each define an axial slot 163 through which a portion of the bearing carrier 161 is slidably disposed to permit the bearing carrier 161 to move relative to the side walls 160 and base 154 in first and second axial directions. When assembled, the base 154 of the bearing support may be secured to the support structure 34 via a bolted connection, welded, etc.

The supporting assembly 132 comprises a cavity 165 defined between the bearing carrier 161, the base 154 and the side walls 160 for receiving a mechanical linkage in the form of a lever arm 167, which, as shown in Figure 11, extends between adjacent supporting assemblies 132. The lever arm 167 is configured to transmit and receive forces from the roller 138 to distribute loads between adjacent supporting assemblies 132. The lever arm 167 comprises a pivot point (e.g., a fulcrum) positioned between adjacent supporting assemblies 132 such that the lever arm 167 can rotate about the pivot point. In this example, the lever arm 167 comprises a curved lower surface to permit the lever arm 167 to rock on a surface of the support structure 34.

Figure 11 illustrates first, second and third adjacent supporting assemblies 132a, 132b, 132c of the circular array 142. A first lever arm 167a extends between the first and second supporting assemblies 132a, 132b, and a second lever arm 167b extends between the second and third supporting assemblies 132b, 132c. In operation, a first downwards force applied by the supported carousel 12 to the roller 138a of the first supporting assembly 132a produces a first moment biasing the first lever arm 167a in a second rotational direction. Consequently, the first lever arm 167a acts on the bearing carrier 161b of the second supporting assembly 132b and biases the bearing carrier 161b and the roller 138b of the second supporting assembly 132b upwards against the track plate. At the same time, a second downwards force applied by the supported carousel 12 to the roller 138b of the second supporting assembly 132b produces a second moment biasing the first lever arm 167a in a first rotational direction, opposing the second moment. The second downwards force applied by the supported carousel 12 to the roller 138b of the second supporting assembly 132b also produces a third moment biasing the second lever arm 167b in a second rotational direction. Further, a third downwards force applied by the supported carousel 12 to the roller 138c of the third supporting assembly 132c produces a fourth moment biasing the second lever arm 167b in a first rotational direction, opposing the third moment. As such, the supporting assemblies 132a, 132b, 132c cooperate with one another to distribute load from the supported carousel 12 between the supporting assemblies 132a, 132b, 132c. This configuration of opposing moments acting on the supporting assemblies 132a, 132b, 132c may extend around the entire circular array 142 of supporting assemblies 132 to provide for a continuous load distribution system interconnecting the supporting assemblies 132. However, in other examples, the support apparatus 122 may comprise additional supporting assemblies 132 of a different form. That is, not every supporting assembly 132 may be configured for load distribution.

The load distribution systems described above may be defined as mechanical load distribution systems, in that the load distribution systems comprise one or more mechanical linkages. Mechanical linkages may provide for simpler and cheaper designs that are less prone to failure, e.g., compared to active hydraulic systems comprising a multiplicity of components, such as pumps, accumulators, etc. However, the present disclosure is not limited to such mechanical load distribution systems, and also provides for a hydraulic load distribution system. The hydraulic load distribution system may be defined as a passive hydraulic load distribution system.

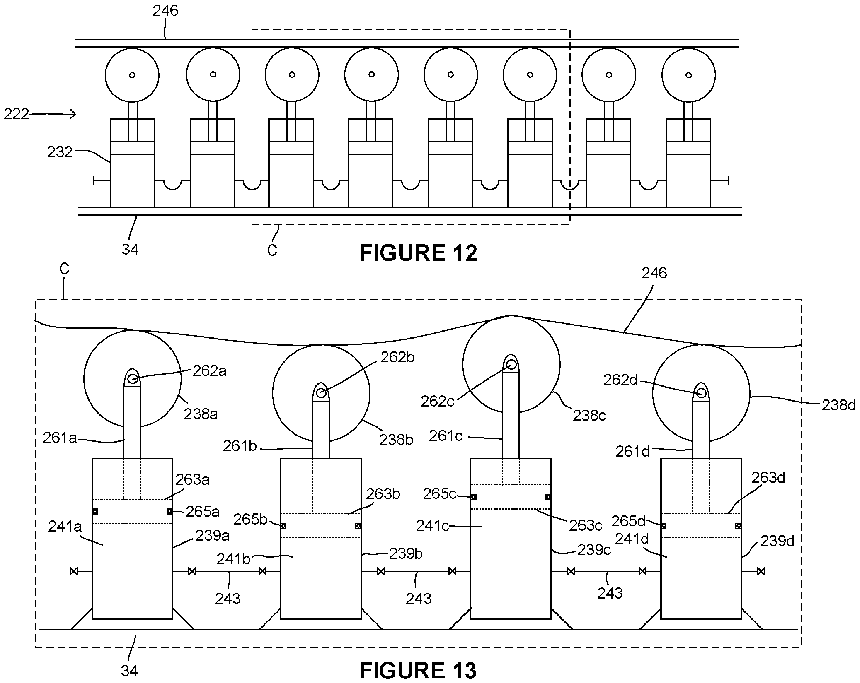

Figure 12 is a schematic illustration of an alternative carousel support apparatus 222. Figure 13 illustrates an enlarged view of region C of Figure 12 illustrating first, second, third and fourth supporting assemblies 232a-d, showing an exaggerated degree of distortion of the track plate 246 supporting the carousel 12. The alternative support apparatus 222 is similar to the support apparatus 22, 122 of Figures 4, 5 and 9, with the supporting assemblies 232 arranged to cooperate with one another to distribute load from a supported carousel 12 between the supporting assemblies 232. However, instead of a mechanical load distribution system, the support apparatus 222 comprises a hydraulic load distribution system.

As with the support apparatus 22, 122 above, the carousel base 28 rests upon one or more circular arrays of supporting assemblies 232 to permit the carousel 12 to rotate relative to the support structure 34 about the carousel axis 24, similar to the configuration illustrated in Figure 5. The supporting assemblies 232 are secured to the support structure 34, e.g., by a bolted connection. A track plate 246 rests upon the array of supporting assemblies 232 and is interposed between the supporting assemblies 232 and the carousel base 28.

Each supporting assembly 232a-d comprises a roller 238a-d axially movable in reverse first and second axial directions relative to a cylinder 239a-d, with the cylinder 239a-d secured to the support structure 234a-d. The cylinder 239a-d of each supporting assembly 232a-d comprises a piston chamber 241a-d containing an incompressible fluid, with each piston chamber 241a-d in pressure communication with a respective piston chamber 241a-d of an adjacent supporting assembly 232a-d via a fluid line 243. The array of supporting assemblies 232a-d defines an enclosed hydraulic system. In other examples, one or more supporting assemblies 232a-d may communicate with an accumulator or fluid reservoir. Each roller 238a-d is attached a bearing carrier 261a-d via roller axle 262a-d, with the bearing carrier 261a-d being secured to a piston 263a-d. The piston 263a-d is disposed within the cylinder 239a-d and moveable in first and second axial directions. The piston 263a-d comprises a dynamic seal 265a-d arrangement to seal the piston chamber 241a-d.

Referring to Figure 13, a first downwards force applied by the supported carousel 12 to a roller 238a of a first supporting assembly 232a is transmitted to the piston 263a of the first supporting assembly 232a. The piston 263a is biased downwards towards a base of the cylinder 239a increasing a fluid pressure within the hydraulic load distribution system. At the same time, a second downwards force applied by the supported carousel 12 to a roller 238b of an adjacent, second supporting assembly 232b is transmitted to the piston 263b of the second supporting assembly 232b. The piston 263b is biased downwards towards a base of the cylinder 239b further increasing a fluid pressure within the hydraulic load distribution system. The same may apply for the third and fourth supporting assemblies 232c, 232d, and so on.

When a bias force applied to the roller 238b of the second supporting assembly 232b is greater than a bias force applied to the roller 238a of the first supporting assembly 232a (e.g., due to an uneven height of the rollers 238a, 238b), the hydraulic load distribution system may increase the volume of the first piston chamber 241a (causing the roller 238a of the first supporting assembly 232a to take more load from the carousel 12) and decrease the volume of the second supporting assembly 232b (causing the roller 238b of the second supporting assembly 232b to take less load from the carousel 12). That is, fluid pressure in each of the chambers 241a-d is communicated with their respective adjacent chambers such that the supporting assemblies 232a-d cooperate with one another to distribute load from the supported carousel 12 between the supporting assemblies 232a-d to maintain an equilibrium of forces acting through each roller 238a-d as the carousel 12 rotates about the carousel axis 24.

In some examples, the support apparatus may comprise a combination of one or more mechanical linkages and hydraulic linkages. In this respect, the load distribution may be defined as a hybrid (mechanical-hydraulic) system.

Features of the present disclosure may provide for a number of advantages. For example, the time required to analyse a carousel interface with a support structure, e.g., a vessel deck, may be reduced. Additionally, carousel designers may be able to quickly give vessel designers standardised loads with respect to where the bearings are to be situated. Moreover, the time required to level bearing brackets or grillages (for those carousels using this method of support) may be reduced. Furthermore, for carousels used on a vessel, the level of conservative engineering may be a judgement, as predicted data of how the ship hull will behave in certain loading conditions can be difficult to calculate or may not be shared by the vessel designer or operator. The carousel support apparatus of the present disclosure may allow for smaller safety margins to be applied and require less over-designing of components for overload cases, which may allow for example the size of the bearings for the roller axles to be reduced.

## Claims

1. A carousel support apparatus (22, 122, 222), comprising:
a plurality of supporting assemblies (32, 132, 232) to be axially interposed between a support structure (34) and a carousel (12) to permit the carousel (12) to be rotatable relative to the support structure (34) about a carousel axis (24), each supporting assembly (32, 132, 232) comprising a bearing (38, 138, 238) axially movable in reverse first and second axial directions; and
a load distribution system configured to be interconnected between at least a first supporting assembly (32a, 132a, 232a) of the plurality of supporting assemblies (32, 132, 232) and a second supporting assembly (32b, 132b, 232b) of the plurality of supporting assemblies (32, 132, 232),
the load distribution system configured to apply a bias force on the first supporting assembly (32a, 132a, 232a) in the first axial direction in response to a bias force applied on the second supporting assembly (32b, 132b, 232b) by a supported carousel (12) in the second axial direction to distribute load from the supported carousel (12) between the first and second supporting assemblies (32, 132, 232).

2. The carousel support apparatus (22, 122) of claim 1, wherein the load distribution system comprises a mechanical linkage configured to apply the bias force from the second supporting assembly (32b, 132b) to the first supporting assembly (32a, 132a).

3. The carousel support apparatus (22, 122) of claim 2, wherein the mechanical linkage is configured to rotate about a pivot point to apply the bias force from the second supporting assembly (32b, 132b) to the first supporting assembly (32a, 132a).

4. The carousel support apparatus (22) of claim 1 or 2, wherein one or both of the first and second supporting assemblies (32) define the mechanical linkage.

5. The carousel support apparatus (22) of claim 4, wherein the first supporting assembly (32a) is configured to rotate about a first pivot point and/or the second supporting assembly (32b) is configured to rotate about a second pivot point to apply the bias force from the second supporting assembly (32b) to the first supporting assembly (32a).

6. The carousel support apparatus (22) of claim 5, wherein each supporting assembly (32) comprises a bearing support portion (68) on one side of the pivot point and a load transfer portion (70) on the other side of the pivot point, the load transfer portion (70b) of the second supporting assembly (32b) configured to engage the bearing support portion (68a) of the first supporting assembly (32a) to apply the bias force from the second supporting assembly (32b) to the first supporting assembly (32a).

7. The carousel support apparatus (22) of claim 6, wherein each supporting assembly (32) comprises a shape profile that transitions from the bearing support portion (68) to the load transfer portion (70) such that the bearing support portion (68) is elevated above the load transfer portion (70).

8. The carousel support apparatus (22) of claim 6 or 7, wherein the bearing support portion (68a) of the first supporting assembly (32a) is configured to extend above and overlap with the load transfer portion (70b) of the second supporting assembly (32b).

9. The carousel support apparatus (122) of claim 2 or 3, wherein the mechanical linkage comprises a lever arm (167) extending between the first and second supporting assemblies (132), wherein the lever arm (167) is configured to engage the first supporting assembly (132a) at a first end of the lever arm (167) and the second supporting assembly (132b) at a second end of the lever arm (167), optionally wherein the lever arm (167) comprises a pivot point located between the first and second supporting assemblies (132).

10. The carousel support apparatus (122) of claim 9, wherein the first and second supporting assemblies (132) each comprise a base (154) and a bearing carrier (161) mounting the bearing (138), the bearing carrier (161) moveably disposed relative to the base (154) in the first and second axial directions.

11. The carousel support apparatus (222) of any preceding claim, wherein the load distribution system comprises a hydraulic linkage (243) configured to apply the bias force from the second supporting assembly (232b) to the first supporting assembly (232a).

12. The carousel support apparatus (222) of claim 11, wherein the first and second supporting assemblies (232) each comprise a piston (263) disposed within a cylinder (239) defining a piston chamber (241) therein, the piston chambers (241) of the first and second supporting assemblies (232) in pressure communication via the hydraulic linkage (243), optionally wherein the bearing (238a) of the first supporting assembly (232a) is secured to the piston (263a) of the first supporting assembly (232a) to be movable in the first and second axial directions, and wherein the bearing (238b) of the second supporting assembly (232b) is secured to the piston (263b) of the second supporting assembly (232b) to be movable in the first and second axial directions.

13. The carousel support apparatus (22, 122, 222) of any preceding claim, wherein the plurality of supporting assemblies (32, 132, 232) comprises a third supporting assembly (32c, 132c, 232c), and wherein the load distribution system is configured to apply a bias force on the second supporting assembly (32b, 132b, 232b) in the first axial direction in response to a bias force applied on the third supporting assembly (32c, 132c, 232c) by a supported carousel (12) in the second axial direction to distribute load from the supported carousel (12) between the second and third supporting assemblies (32, 132, 232).

14. The carousel support apparatus (22, 122, 222) of any preceding claim, wherein the carousel support apparatus comprises one or more circular arrays (42, 44) of supporting assemblies (32, 132, 232).

15. A method for supporting rotation of a carousel (12), comprising:
axially interposing a plurality of supporting assemblies (32, 132, 232) between a support structure (34) and a carousel (12) to permit the carousel (12) to be rotatable relative to the support structure (34) about a carousel axis (24), each supporting assembly (32, 132, 232) comprising a bearing (38, 138, 238) axially movable in reverse first and second axial directions; and
applying a bias force on a first supporting assembly (32a, 132a, 232a) of the plurality of supporting assemblies (32, 132, 232) in the first axial direction in response to a bias force applied on a second supporting assembly (32b, 132b, 232b) of the plurality of supporting assemblies (32, 132, 232) by a supported carousel (12) in the second axial direction to distribute load from the supported carousel (12) between the first and second supporting assemblies (32, 132, 232).
